# EUROPÄISCHE PATENTANMELDUNG

(11) **EP 1 655 168 A1**
(43) Veröffentlichungstag der Anmeldung: **10.05.2006**
(21) Anmeldenummer: 04026189.3
(22) Anmeldetag: 04.11.2004
(51) Int. Cl.: B60N 2/02, B60N 2/10

(54) **Elektrischer Steckverbinder**

(71) Anmelder: Delphi Technologies, Inc., Troy, MI 48007 (US)
(72) Erfinder: Lübstorf, Mario, 42489 Wülfrath (DE); Czwalinna, Klaus, 44894 Bochum (DE)
(74) Vertreter: Manitz, Finsterwald & Partner GbR

(57) **Zusammenfassung**

Die Erfindung betrifft einen elektrischen Steckverbinder mit einem in einer Aussparung (20) einer Bodenstruktur eines Fahrzeugs angeordneten ersten Anschlusselement (10), einen zum ersten Anschlusselement (10) komplementär ausgebildeten zweiten Anschlusselement (12), welches an einer Unterseite (14) eines Fahrzeugsitzes (16) angeordnet ist, der zwischen einer Montagestellung und einer Sitzstellung um eine Schwenkachse verschwenkbar ist, und einen im Bereich der Schwenkachse angeordneten und zwischen den Fahrzeugsitz (16) und eine Abdeckung (22) für die Aussparung (20) geschalteten Getriebemechanismus, um die Aussparung (20), welche in der Montagestellung des Fahrzeugsitzes (16) durch die Abdeckung (22) verschlossen ist, beim Verschwenken des Fahrzeugsitzes (16) in die Sitzstellung zu öffnen.

## Beschreibung

Die Erfindung betrifft einen elektrischen Steckverbinder mit einem an einer Bodenstruktur eines Fahrzeugs angeordneten ersten Anschlusselement und einem zum ersten Anschlusselement komplementär ausgebildeten zweiten Anschlusselement, welches an einer Unterseite eines Fahrzeugsitzes angeordnet ist, der zwischen einer Montagestellung und einer Sitzstellung um eine Schwenkachse verschwenkbar ist.

Bei einem bekannten Steckverbinder dieser Art ist eine Abdeckung für das erste Anschlusselement vorgesehen. Solange sich der Fahrzeugsitz nicht in seiner Sitzstellung befindet, ist das erste Anschlusselement durch die Abdeckung geschützt. Wird der Fahrzeugsitz aus seiner Montagestellung in die Sitzstellung verschwenkt, so wird die Abdeckung durch im Bereich des zweiten Anschlusselementes angeordnete Rampen verdrängt, um das erste Anschlusselement frei zu machen und dadurch ein Zusammenstecken der Anschlusselemente zu ermöglichen. Als problematisch erweist sich bei dieser Anordnung, dass ein unkontrolliertes Herunterklappen des Fahrzeugsitzes in die Sitzstellung zu einer Beschädigung der Abdeckung führen kann.

Der Erfindung liegt die Aufgabe zugrunde, einen elektrischen Steckverbinder zu schaffen, dessen zuverlässige Funktion dauerhaft sichergestellt ist.

Zur Lösung der Aufgabe ist ein elektrischer Steckverbinder mit den Merkmalen des Anspruchs 1 vorgesehen.

Der erfindungsgemäße elektrische Steckverbinder umfasst ein in einer Aussparung einer Bodenstruktur eines Fahrzeugs angeordnetes erstes Anschlusselement und ein zum ersten Anschlusselement komplementär ausgebildetes zweites Anschlusselement, welches an einer Unterseite eines Fahrzeugsitzes angeordnet ist, der zwischen einer Montagestellung und einer Sitzstellung um eine Schwenkachse verschwenkbar ist. Im Bereich der Schwenkachse ist ein zwischen den Fahrzeugsitz und eine Abdeckung für die Aussparung geschalteter Getriebemechanismus angeordnet, durch den die Aussparung, welche in der Montagestellung des Fahrzeugsitzes durch die Abdeckung verschlossen ist, beim Verschwenken des Fahrzeugsitzes in die Sitzstellung geöffnet werden kann.

Durch die Anordnung des ersten Anschlusselementes in einer Aussparung der Fahrzeugbodenstruktur ist das erste Anschlusselement in der Bodenstruktur versteckt untergebracht. Dabei ragt es im Falle eines in der Montagestellung befindlichen, d.h. um- bzw. hochgeklappten, oder ausgebauten Fahrzeugsitzes bevorzugt nicht über eine Oberseite der Bodenstruktur hinaus.

Auf diese Weise werden bei umgeklapptem oder ausgebautem Fahrzeugsitz im Bereich des ersten Anschlusselementes eine ebenflächige Bodenstruktur und somit beispielsweise ein ebener Kofferraumboden geschaffen. Außerdem ist das erste Anschlusselement vor einer mechanischen Beschädigung, z.B. durch im Kofferraum gelagerte Gegenstände, geschützt.

Durch die Abdeckung lässt sich die Aussparung im umgeklappten oder ausgebauten Zustand des Fahrzeugsitzes verschließen, so dass das erste Anschlusselement auch vor äußeren Einflüssen, wie z.B. Staub oder Feuchtigkeit, wirksam geschützt ist. Gegebenenfalls kann zwischen der Abdeckung und der Bodenstruktur eine Dichtung vorgesehen sein, durch welche der Schutz des ersten Anschlusselementes vor äußeren Einflüssen noch weiter verbessert ist.

Aufgrund der Ankopplung der Abdeckung an den Fahrzeugsitz mittels des Getriebemechanismus kann die Schwenkbewegung des Fahrzeugsitzes je nach Ausgestaltung des Getriebemechanismus in unterschiedliche Bewegungen der Abdeckung umgesetzt werden. Durch den Getriebemechanismus ist außerdem die Gefahr einer Beschädigung der Abdeckung durch den Fahrzeugsitz im Wesentlichen ausgeschlossen. Dies gilt selbst für den Fall, dass der Fahrzeugsitz unkontrolliert aus seiner Montagestellung in die Sitzstellung herunterklappt.

Nicht nur durch den Schutz des ersten Anschlusselementes vor äußeren Einflüssen, sondern auch durch den Schutz des ersten Anschlusselementes und der Abdeckung vor mechanischen Beschädigungen ist eine zuverlässige Funktion des erfindungsgemäßen elektrischen Steckverbinders insgesamt dauerhaft sichergestellt.

Vorteilhafte Ausführungsformen der Erfindung sind den Unteransprüchen, der Beschreibung und der Zeichnung zu entnehmen.

Gemäß einer bevorzugten Ausführungsform des erfindungsgemäßen Steckverbinders ist die Schwenkbewegung des Fahrzeugsitzes durch den Getriebemechanismus in eine, insbesondere zur Bodenstruktur senkrechte, Translation der Abdeckung umwandelbar. Das Getriebe ist mit anderen Worten so ausgebildet, dass es die Schwenkbewegung des Fahrzeugsitzes in eine geradlinige Bewegung der Abdeckung umsetzt.

Durch eine solche Bewegung kann die Abdeckung beispielsweise zum Öffnen der Aussparung von der Bodenstruktur abgehoben werden. Die Abdeckung und eine gegebenenfalls zwischen der Abdeckung und der Bodenstruktur vorgesehene Dichtung können auf diese Weise besonders einfach außer Eingriff gebracht werden.

Umkehrt kann die Abdeckung durch eine derartige Translation beispielsweise zum Verschließen der Aussparung leicht wieder auf die Bodenstruktur aufgesetzt und gegebenenfalls mit der Dichtung in Eingriff gebracht werden.

Gemäß einer weiteren vorteilhaften Ausbildung der Erfindung ist die Schwenkbewegung des Fahrzeugsitzes durch den Getriebemechanismus, gegebenenfalls nach einer Translation der Abdeckung, in einer Bewegung der Abdeckung entlang einer Kreisbahn umwandelbar. Dadurch kann die Abdeckung zur Seite wegbewegt und die Öffnung der Aussparung für das Zusammenstecken der Anschlusselemente freigemacht werden.

Wird zunächst eine Translation und dann eine Bewegung der Abdeckung entlang der Kreisbahn durchgeführt, so kann die Abdeckung zunächst von der Bodenstruktur abgehoben und dadurch gegebenenfalls von einer Dichtung gelöst werden und anschließend zur vollständigen Öffnung der Aussparung zur Seite bewegt werden.

Zum Verschließen der Abdeckung werden die Bewegungen in der umgekehrten Reihenfolge durchgeführt, d.h. es erfolgt zunächst eine Bewegung der Abdeckung entlang der Kreisbahn und anschließend das Absenken auf die Bodenstruktur.

Vorzugsweise ist die Abdeckung, gegebenenfalls nach einem Abheben von der Bodenstruktur, neben dem ersten Anschlusselement in der Aussparung versenkbar. Dies ermöglicht eine Platz sparende und geschützte Unterbringung der Abdeckung im zusammengesteckten Zustand des Steckverbinders, d.h. wenn sich der Fahrzeugsitz in seiner Sitzstellung befindet.

Die Abdeckung kann beim Versenken in die Aussparung eine Verdrehung um etwa 90° vollziehen. Während die Abdeckung zum Verschließen der Aussparung etwa horizontal an der Bodenstruktur anliegt, kann sie nach vollständiger Versenkung in die Aussparung also zumindest annähernd vertikal orientiert sein. Zur Unterbringung der Abdeckung in der Aussparung ist somit ein minimaler Platzbedarf erforderlich.

Gemäß einer weiteren bevorzugten Ausführungsform ist die Schwenkbewegung des Fahrzeugsitzes durch den Getriebemechanismus in eine, insbesondere zur Bodenstruktur senkrechte, Translation des ersten Anschlusselementes umwandelbar. Je nach Richtung der Schwenkbewegung des Fahrzeugsitzes wird das erste Anschlusselement mit anderen Worten relativ zur Bodenstruktur angehoben oder abgesenkt.

Dies ermöglicht z.B. eine Anhebung des ersten Anschlusselementes, wenn der Fahrzeugsitz aus seiner Montagestellung in die Sitzstellung heruntergeklappt wird. Das erste Anschlusselement bewegt sich dabei dem zweiten Anschlusselement entgegen und unter Umständen ein wenig aus der Aussparung heraus, wodurch das Zusammenstecken der Anschlusselemente vereinfacht ist.

Die Translation des ersten Anschlusselementes kann dabei gleichzeitig mit oder nach einer Translation der Abdeckung, oder gleichzeitig mit oder nach einer Bewegung der Abdeckung entlang einer Kreisbahn, insbesondere gleichzeitig mit oder nach einer Versenkung der Abdeckung in der Aussparung, erfolgen.

Gemäß einer weiteren vorteilhaften Ausbildung der Erfindung umfasst der Getriebemechanismus einen Schieber, welcher im Wesentlichen parallel zur Bodenstruktur verschiebbar ist. Die Schwenkbewegung des Fahrzeugsitzes wird also in eine lineare Bewegung in zur Bodenstruktur paralleler Richtung umgesetzt.

Vorzugsweise ist der Schieber mit einem Betätigungsorgan des Fahrzeugsitzes in Eingriff bringbar, welches bei einer Verschwenkung des Fahrzeugsitzes eine Verschiebung des Schiebers bewirkt. Zum Öffnen der Aussparung wirkt der Fahrzeugsitz also nicht direkt und von oben auf die Abdeckung ein, sondern die Schwenkbewegung des Fahrzeugsitzes wird über das Betätigungsorgan in eine zur Bodenstruktur parallele Verschiebung des Schiebers umgesetzt. Der Fahrzeugsitz wirkt somit lediglich indirekt mit der Abdeckung zusammen, wodurch die Abdeckung vor einer Beschädigung durch den Fahrzeugsitz geschützt ist.

Das Betätigungsorgan kann eine gekrümmte, insbesondere kreisbogenförmige und bevorzugt im Bereich der Schwenkachse angeordnete, Führungskulisse für einen Führungsbolzen eines Schiebers aufweisen. Durch das Zusammenwirken einer derartigen Führungskulisse mit einem Führungsbolzen des Schiebers, lässt sich die Schwenkbewegung des Fahrzeugsitzes auf besonders einfache Weise in eine lineare Bewegung des Schiebers umwandeln.

Vorteilhafterweise ist die Führungskulisse an ihrem einen Ende offen. Dies ermöglicht ein Entkoppeln des Betätigungsorgans von dem Schieber, d.h. mit anderen Worten eine Entkopplung von Fahrzeugsitz und Getriebemechanismus, beispielsweise wenn der Fahrzeugsitz aus dem Fahrzeug ausgebaut werden soll.

Alternativ zur Führungskulisse kann das Betätigungsorgan auch eine Schrägfläche aufweisen, die mit einer Schrägfläche des Schiebers in Eingriff bringbar ist. Durch das Zusammenwirken der Schrägflächen wird die Schwenkbewegung des Fahrzeugsitzes - ähnlich wie beim Zusammenwirken von Führungskulisse und Führungsbolzen - auf einfache Weise in eine lineare Bewegung des Schiebers umgewandelt. Da das Betätigungsorgan und der Schieber lediglich über die Schrägflächen miteinander verbunden sind, ermöglicht auch diese Variante des erfindungsgemäßen Steckverbinders eine einfache Entkopplung des Fahrzeugsitzes von dem Getriebemechanismus, damit der Fahrzeugsitz aus dem Fahrzeug ausgebaut werden kann.

Nachfolgend wird die Erfindung rein beispielhaft anhand zweier vorteilhafter Ausführungsformen unter Bezugnahme auf die Zeichnung beschrieben. Es zeigen:
- Fig. 1: eine erste Ausführungsform des erfindungsgemäßen elektrischen Steckverbinders bei in Montagestellung befindlichem Fahrzeugsitz;
- Fig. 2: den Steckverbinder von Fig. 1 mit von einer Bodenstruktur abgehobener Abdeckung bei verschwenktem Fahrzeugsitz;
- Fig. 3: den Steckverbinder von Fig. 1 mit in einer Aussparung der Bodenstruktur versenkter Abdeckung bei noch weiter verschwenktem Fahrzeugsitz;
- Fig. 4: den Steckverbinder von Fig. 1 mit in der Aussparung angehobenem ersten Anschlusselement bei noch weiter verschwenktem Fahrzeugsitz;
- Fig. 5: den Steckverbinder von Fig. 1 mit zusammengesteckten Anschlusselementen bei in Sitzstellung befindlichem Fahrzeugsitz; und
- Fig. 6a - c: eine zweite Ausführungsform des erfindungsgemäßen Steckverbinders in verschiedenen Schwenkstellungen des Fahrzeugsitzes.

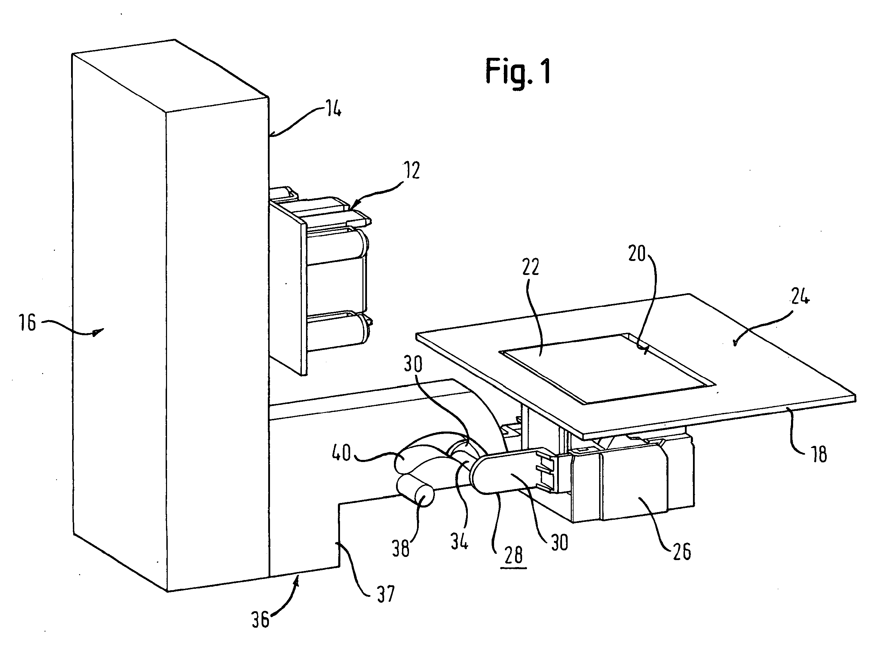

Der in Fig. 1 dargestellte erfindungsgemäße elektrische Steckverbinder gemäß einer ersten Ausführungsform umfasst ein erstes Anschlusselement 10, welches im dargestellten Ausführungsbeispiel als Buchsenteil ausgebildet ist, und ein zum ersten Anschlusselement 10 komplementär ausgebildetes zweites Anschlusselement 12, im dargestellten Ausführungsbeispiel also ein Steckerteil.

Das zweite Anschlusselement 12 ist an einer Unterseite 14 eines Fahrzeugsitzes 16 angeordnet. Das erste Anschlusselement 10 ist dagegen in einer Aussparung 20 einer Bodenstruktur 18 des Fahrzeuges untergebracht.

Fig. 1 zeigt den Fahrzeugsitz 16 in einer hoch- bzw. umgeklappten Stellung. Da sich der Fahrzeugsitz 16 in dieser Stellung aus dem Fahrzeug ausbauen lässt, wird diese Fahrzeugsitzstellung nachfolgend als Montagestellung bezeichnet. Befindet sich der Fahrzeugsitz 16 in dieser Montagestellung, so ist die Unterseite 14 des Fahrzeugsitzes 16 im Wesentlichen senkrecht zu einer Oberseite 24 der Bodenstruktur 18, in der Praxis also etwa vertikal orientiert.

Wie in Fig. 1 ferner dargestellt ist, sind die Anschlusselemente 10, 12 des Steckverbinders in der Montagestellung des Fahrzeugsitzes 16 entkoppelt.

Die Aussparung 20, in welcher das erste Anschlusselement 10 angeordnet ist, ist in der Montagestellung des Fahrzeugsitzes 16 durch eine Abdeckplatte 22 verschlossen. Zwischen der Abdeckung 22 und der Bodenstruktur 18 ist eine nicht dargestellte Dichtung vorgesehen, so dass das in der Aussparung 20 befindliche erste Anschlusselement 10 wirksam vor äußeren Einflüssen, wie beispielsweise Staub oder Feuchtigkeit, geschützt ist.

Dadurch, dass das erste Anschlusselement 10 in der Montagestellung des Fahrzeugsitzes 16 oder auch bei ausgebautem Fahrzeugsitz 16 nicht aus der Bodenstruktur 18 herausragt, sondern in der Aussparung 20 versenkt ist, und die Aussparung 20 durch die plane Abdeckplatte 22 verschlossen ist, weist die Bodenstruktur 18 bei umgeklapptem oder ausgebautem Fahrzeugsitz 16 zumindest im Bereich des ersten Anschlusselementes 10 eine im Wesentlichen plane Oberseite 24 auf.

Bei einer Erweiterung des Kofferraums durch Umklappen oder Ausbauen des Fahrzeugsitzes 16 wird durch die Versenkung des ersten Anschlusselementes 10 in der Aussparung 20 und die Verschließung der Aussparung 20 durch die Abdeckung 22 folglich ein ebener Kofferraumboden erreicht, aus dem das erste Anschlusselement 10 nicht störend herausragt.

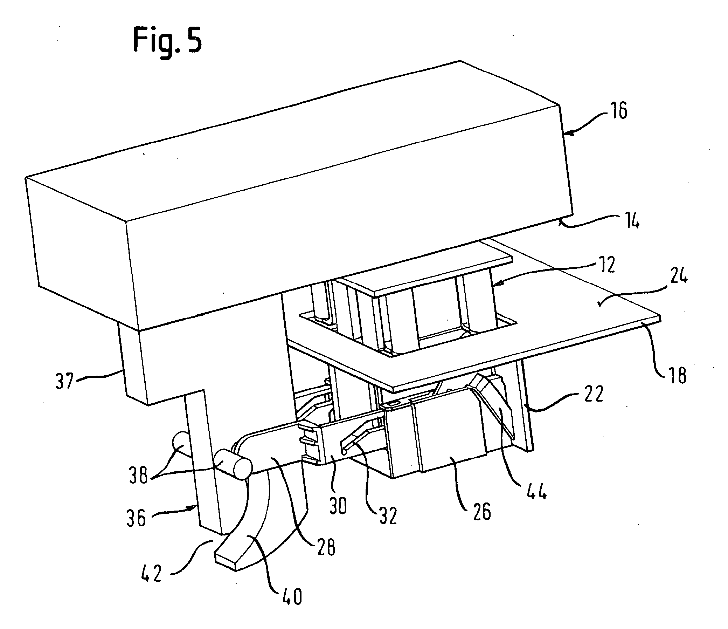

Fig. 5 zeigt den Fahrzeugsitz 16 in einer Sitzstellung, in welcher die Unterseite 14 des Fahrzeugsitzes 16 im Wesentlichen parallel zur Oberseite 24 der Bodenstruktur 18 bzw. horizontal verläuft.

In dieser Sitzstellung sind die Anschlusselemente 10, 12 miteinander gekoppelt, um eine elektrische Verbindung zwischen im Fahrzeugsitz 16 angeordneten elektrischen Einrichtungen und einer zentralen Steuereinheit und/oder Stromversorgung zu schaffen. Bei den elektrischen Einrichtungen des Fahrzeugsitzes 16 kann es sich beispielsweise um eine Sitzheizung, einen Seitenairbag und/oder eine Einrichtung zur Erkennung der Sitzbelegung handeln.

Damit die Anschlusselemente 10, 12 in der Sitzstellung des Fahrzeugsitzes 10 zusammengesteckt werden können, muss die Aussparung 20 der Bodenstruktur 18 geöffnet, d.h. die Abdeckplatte 22 wegbewegt werden. Zu diesem Zweck ist erfindungsgemäß ein durch den Fahrzeugsitz 16 betätigbarer Getriebemechanismus 26 des Steckverbinders vorgesehen, welcher zwischen die Abdeckplatte 22 und den Fahrzeugsitz 16 geschaltet ist.

Wie die Fig. 1 bis 5 zeigen, umfasst der Getriebemechanismus 26 einen parallel zur Bodenstruktur 18 verschiebbaren Schieber 28. Der Schieber 28 weist zwei im Wesentlichen parallel zueinander verlaufende Seitenteile 30 auf, die in einem zum ersten Anschlusselement 10 weisenden Abschnitt das erste Anschlusselement 10 zumindest teilweise seitlich umgreifen und die jeweils eine Führungskulisse 32 aufweisen, um mit weiteren Getriebeelementen 44 des Getriebemechanismus 26 zusammenzuwirken.

Im Bereich seines zum Fahrzeugsitz 16 weisenden Endes sind die Seitenteile 30 des Schiebers 28 durch einen Führungsbolzen 34 miteinander verbunden.

Zur Betätigung des Getriebemechanismus 26 ist der Fahrzeugsitz 16 mit einem Betätigungsorgan 36 versehen. Das Betätigungsorgan 36 ist durch einen schenkelförmigen Fortsatz des Fahrzeugsitzgestells 37 gebildet, der sich im Wesentlichen rechtwinklig zur Unterseite 14 des Fahrzeugsitzes 16 erstreckt und in der Montagestellung des Fahrzeugsitzes 16 in Richtung des ersten Anschlusselementes 10 weist. Durch das Betätigungsorgan 36 erstreckt sich ein zylindrischer Lagerbolzen 38 zur verschwenkbaren Lagerung des Fahrzeugsitzes 16 in der Bodenstruktur 18.

In einem Abschnitt des Betätigungsorgans 36, welcher sich von dem Lagerbolzen 38 in Richtung des freien Endes des Betätigungsorgans 36 erstreckt, ist eine Führungskulisse 40 für den Führungsbolzen 34 des Schiebers 28 vorgesehen. Die Führungskulisse 40 erstreckt sich im Wesentlichen kreisbogenförmig ausgehend von dem Lagerbolzen 38 in Richtung des freien Endes des Betätigungsorgans 36 und öffnet sich zu einer Seite des Betätigungsorgans 36. Dieses offene Ende 42 der Führungskulisse 40 ist so positioniert, dass der Führungsbolzen 34 des Schiebers 28 bei in der Montagestellung befindlichem Fahrzeugsitz 16 und bei vollständig durch die Abdeckung 22 verschlossener Aussparung 20 in die Führungskulisse 40 eingreifen kann.

Zum Zusammenstecken der Anschlusselemente 10, 12 muss die Aussparung 20 geöffnet und die Abdeckplatte 22 zur Freigabe des ersten Anschlusselementes 10 wegbewegt werden.

Das Öffnen der Aussparung 20 erfolgt durch das Verschwenken des Fahrzeugsitzes 16 um die durch den Lagerbolzen 38 verlaufende Schwenkachse aus der Montagestellung in die Sitzstellung, mit anderen Worten also durch ein Herunterklappen des Fahrzeugsitzes 16.

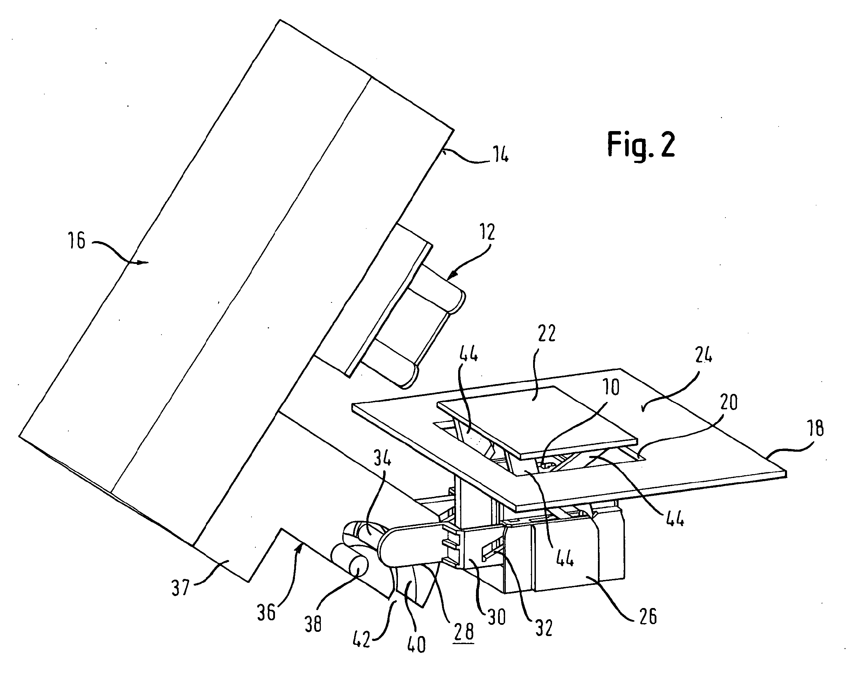

Wie in Fig. 2 gezeigt ist, bewegt sich der Führungsbolzen 34 beim Verschwenken des Fahrzeugsitzes 16 entlang der Führungskulisse 40 des Betätigungsorgans 36. Beim Herunterklappen des Fahrzeugsitzes 16 wird der Schieber 28 dadurch in Richtung des Lagerbolzens 38 gezogen. Die Verschwenkung des Fahrzeugsitzes 16 bewirkt mit anderen Worten eine zur Oberseite 24 der Bodenstruktur 18 parallele Verschiebung des Schiebers 28.

Diese Bewegung des Schiebers 28 wird durch den Getriebemechanismus 26 in eine zur Bodenstruktur 18 senkrechte Translation der Abdeckplatte 22 umgewandelt. Der Getriebemechanismus 26 ist mit anderen Worten so ausgebildet, dass durch das Herausziehen des Schiebers 28 mit der Abdeckplatte verbundene Getriebeelemente 44 senkrecht zur Bewegungsrichtung des Schiebers 28 nach oben bewegt werden und die Abdeckplatte 22 dadurch von der Bodenstruktur 18 abgehoben wird. Auf diese Weise wird die Abdeckplatte 22 von der zwischen der Bodenstruktur 18 und der Abdeckplatte 22 angeordneten Dichtung gelöst.

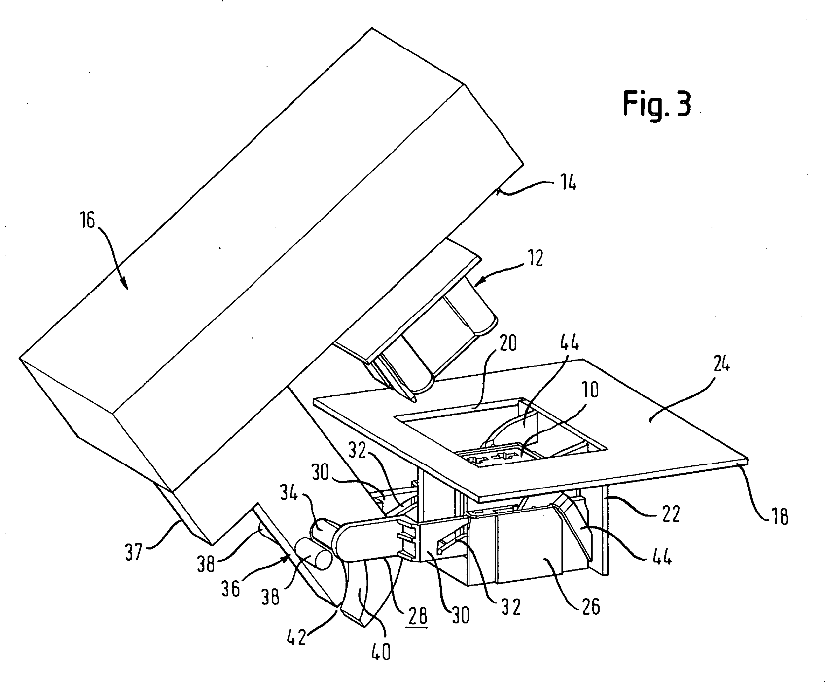

Wie Fig. 3 zeigt, bewegt sich der Führungsbolzen 34 bei weitergehender Verschwenkung des Fahrzeugsitzes 16 weiter entlang der Führungskulisse 40, wodurch der Schieber 28 noch weiter in Richtung des Lagerbolzens 38 gezogen wird. Diese weitergehende Bewegung des Schiebers 28 wird durch den Getriebemechanismus 26 in eine Verschwenkung der Getriebeelemente 44 umgewandelt. Diese Schwenkbewegung der Getriebeelemente 44 erfolgt im Wesentlichen in der gleichen Richtung wie die Verschwenkung des Fahrzeugsitzes 16.

Durch die Verschwenkung der Getriebeelemente 44 wird die Abdeckplatte 22 entlang einer Kreisbahn neben die vom Fahrzeugsitz 16 abgewandte Seite des ersten Anschlusselementes 10 bewegt, wobei die Abdeckplatte 22 stets tangential zu dieser Kreisbahn orientiert ist. Während der Verschwenkung der Getriebeelemente 44 vollzieht die Abdeckplatte 22 somit eine Verdrehung um etwa 90°, so dass sie in einer Endlage im Wesentlichen senkrecht zur Oberseite 24 der Bodenstruktur 18 orientiert ist. In dieser Endlage ist die Abdeckplatte 22 vollständig in der Aussparung 20 versenkt.

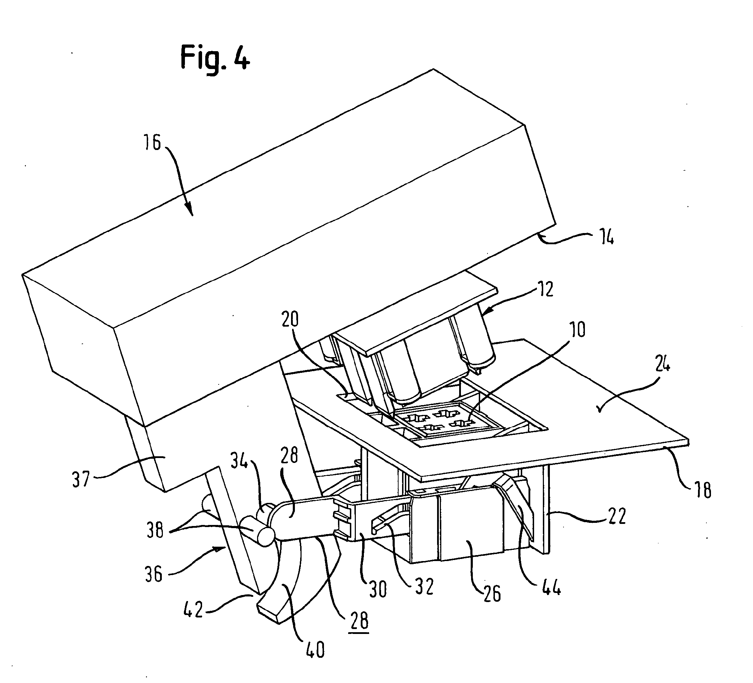

Bei noch weitergehender Verschwenkung des Fahrzeugsitzes 16 bewegt sich der Führungsbolzen 34 weiter entlang der Führungskulisse 40, und der Schieber 28 wird noch weiter in Richtung des Lagerbolzens 28 gezogen. Wie Fig. 4 zeigt, wird die Bewegung des Schiebers 28 nunmehr in eine Translation des ersten Anschlusselementes 10 umgewandelt. Genauer gesagt wirkt der Getriebemechanismus 26 nunmehr so, dass das erste Anschlusselement 10 angehoben und nach oben in Richtung der Öffnung der Aussparung 20 gedrückt wird. Dies erleichtert eine Kopplung der Anschlusselemente 10, 12 und somit das Zusammenstecken des Steckverbinders.

Fig. 5 zeigt den Fahrzeugsitz 16 in seiner Sitzstellung. Die Anschlusselemente 10, 12 sind in dieser Sitzstellung vollständig zusammengesteckt. Der Schieber 28 ist maximal in Richtung des Lagerbolzens 38 verschoben, wobei sich der Führungsbolzen 34 des Schiebers 28 im Bereich des geschlossenen Endes der Führungskulisse 40 des Betätigungsorgans 36 befindet. Die Abdeckplatte 22 ist im Wesentlichen senkrecht zur Oberseite 24 der Bodenstruktur 18 orientiert und vollständig in der Aussparung 20 versenkt. Die Unterseite 14 des Fahrzeugsitzes verläuft im Wesentlichen parallel zur Oberseite 24 der Bodenstruktur 18 und das Betätigungsorgan 36 im Wesentlichen senkrecht dazu.

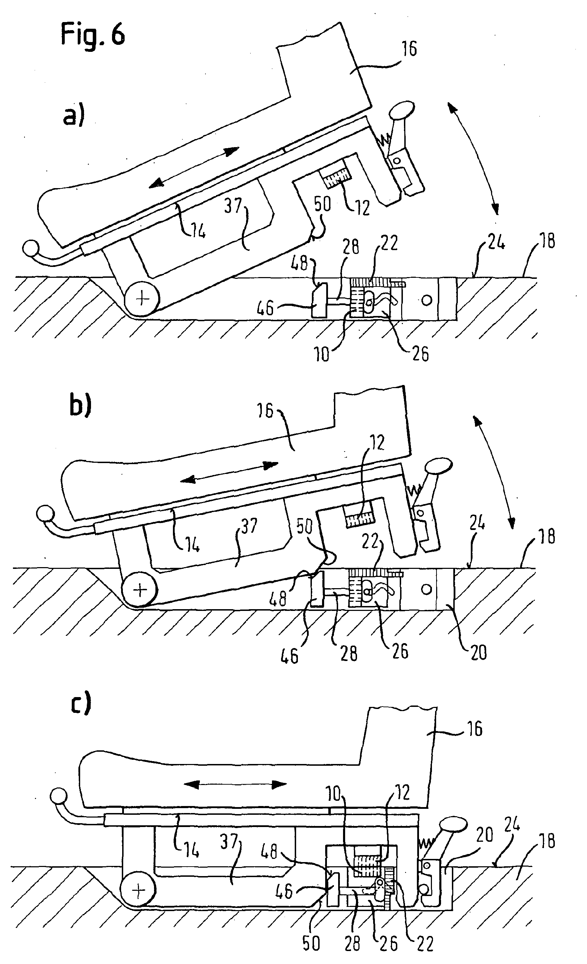

In Fig. 6 ist eine zweite Ausführungsform des erfindungsgemäßen Steckverbinders dargestellt. Dieser Steckverbinder unterscheidet sich von der voranstehend beschriebenen ersten Ausführungsform lediglich in der Ausbildung des Schiebers 28 und des Betätigungsorgans 36 sowie in der Wirkung des Getriebemechanismus 26. Hinsichtlich der übrigen, übereinstimmenden Merkmale wird auf die voranstehende Beschreibung verwiesen.

Wie Fig. 6a zeigt, umfasst der Schieber 28 der zweiten Ausführungsform anstelle des Führungsbolzens 34 einen Kopfabschnitt 46, der an seiner Oberseite mit einer zum Fahrzeugsitz 16 weisenden Schrägfläche 48 versehen ist.

Das Betätigungsorgan 36 des Fahrzeugsitzes 16 ist ebenfalls durch eine Schrägfläche 50 gebildet, die an einer Unterseite des Fahrzeugsitzgestells 37 vorgesehen ist. Die Schrägfläche 50 des Fahrzeugsitzes 16 ist dabei so positioniert, dass sie beim Herunterklappen des Fahrzeugsitzes 16 aus der Montagestellung in die Sitzstellung mit der Schrägfläche 48 des Schiebers 28 in Kontakt gerät (Fig. 6b).

Die Orientierungen der Schrägflächen 48, 50 sind derart aneinander angepasst, dass die Schrägflächen 48, 50 bei einem noch weitergehenden Herunterklappen des Fahrzeugsitzes 16 aneinander vorbei gleiten, wobei der Schieber 28 in Richtung des ersten Anschlusselementes 10 verschoben wird (Fig. 6c).

Durch den Getriebemechanismus 26 wird diese Bewegung des Schiebers 28 zunächst in eine Translation, dann in eine Bewegung der Abdeckplatte 22 entlang einer Kreisbahn und anschließend in eine Translation des ersten Anschlusselementes 10 umgesetzt.

Wie bei der ersten Ausführungsform wird also auch hier durch die Verschiebung des Schiebers 28 die Abdeckplatte 22 zunächst angehoben und dann zur Seite weggeklappt und danach das erste Anschlusselement 10 angehoben. Im Unterschied zur ersten Ausführungsform werden diese Bewegungen jedoch nicht durch eine Verschiebung des Schiebers 28 vom ersten Anschlusselement 10 weg, sondern durch eine Bewegung des Schiebers 28 in Richtung des ersten Anschlusselementes 10 ausgelöst.

Durch eine Verschwenkung des Fahrzeugsitzes 16 aus der Sitzstellung in die Montagestellung erfolgen die voranstehend beschriebenen Bewegungsabläufe bei beiden Ausführungsformen in umgekehrter Richtung und Reihenfolge.

Zunächst wird also die Steckverbindung der Anschlusselemente 10, 12 gelöst und danach das erste Anschlusselement 10 wieder in die Aussparung 20 abgesenkt. Anschließend wird die Abdeckplatte 22 aus der Aussparung 20 herausgeklappt und in eine zur Bodenstruktur 18 parallele Lage über der Aussparung 20 gebracht. Aus dieser Lage wird die Abdeckplatte 22 abgesenkt, bis sie wieder auf der Bodenstruktur 18 aufsitzt, um die Aussparung 20 zusammen mit der zwischen der Abdeckplatte 22 und der Aussparung 20 angeordneten Dichtung zu verschließen.

### Bezugszeichenliste

- 10: erstes Anschlusselement
- 12: zweites Anschlusselement
- 14: Unterseite
- 16: Fahrzeugsitz
- 18: Bodenstruktur
- 20: Aussparung
- 22: Abdeckplatte
- 24: Oberseite
- 26: Getriebemechanismus
- 28: Schieber
- 30: Seitenteil
- 32: Führungskulisse
- 34: Führungsbolzen
- 36: Betätigungsorgan
- 37: Fahrzeugsitzgestell
- 38: Lagerbolzen
- 40: Führungskulisse
- 42: offenes Ende
- 44: Getriebeelement
- 46: Kopfabschnitt
- 48: Schrägfläche
- 50: Schrägfläche

## Patentansprüche

1. Elektrischer Steckverbinder mit
einem in einer Aussparung (20) einer Bodenstruktur (18) eines Fahrzeugs angeordneten ersten Anschlusselement (10),
einem zum ersten Anschlusselement (10) komplementär ausgebildeten zweiten Anschlusselement (12), welches an einer Unterseite (14) eines Fahrzeugsitzes (16) angeordnet ist, der zwischen einer Montagestellung und einer Sitzstellung um eine Schwenkachse verschwenkbar ist, und
einem im Bereich der Schwenkachse angeordneten und zwischen den Fahrzeugsitz (16) und eine Abdeckung (22) für die Aussparung (20) geschalteten Getriebemechanismus (26), um die Aussparung (20), welche in der Montagestellung des Fahrzeugsitzes (16) durch die Abdeckung (22) verschlossen ist, beim Verschwenken des Fahrzeugsitzes (16) in die Sitzstellung zu öffnen.

2. Steckverbinder nach Anspruch 1,
**dadurch gekennzeichnet, dass**
die Schwenkbewegung des Fahrzeugsitzes (16) durch den Getriebemechanismus (26) in eine, insbesondere zur Bodenstruktur (18) senkrechte, Translation der Abdeckung (22) umwandelbar ist.

3. Steckverbinder nach Anspruch 1 oder 2,
**dadurch gekennzeichnet, dass**
die Schwenkbewegung des Fahrzeugsitzes (16) durch den Getriebemechanismus (26), gegebenenfalls nach einer Translation der Abdeckung (22), in eine Bewegung der Abdeckung (22) entlang einer Kreisbahn umwandelbar ist.

4. Steckverbinder nach einem der vorherigen Ansprüche,
**dadurch gekennzeichnet, dass**
die Abdeckung (22), gegebenenfalls nach einem Abheben von der Bodenstruktur (18), neben dem ersten Anschlusselement (10) in der Aussparung (20) versenkbar ist.

5. Steckverbinder nach Anspruch 4,
**dadurch gekennzeichnet, dass**
die Abdeckung (22) beim Versenken in die Aussparung (20) eine Verdrehung um etwa 90° vollzieht.

6. Steckverbinder nach einem der vorherigen Ansprüche,
**dadurch gekennzeichnet, dass**
die Schwenkbewegung des Fahrzeugsitzes (16) durch den Getriebemechanismus (26) in eine, insbesondere zur Bodenstruktur (18) senkrechte, Translation des ersten Anschlusselements (10) umwandelbar ist.

7. Steckverbinder nach Anspruch 6,
**dadurch gekennzeichnet, dass**
die Translation des ersten Anschlusselements (10) gleichzeitig mit oder nach einer Translation der Abdeckung (22) erfolgt.

8. Steckverbinder nach Anspruch 6 oder 7,
**dadurch gekennzeichnet, dass**
die Translation des ersten Anschlusselements (10) gleichzeitig mit oder nach einer Bewegung der Abdeckung (22) entlang einer Kreisbahn und insbesondere gleichzeitig mit oder nach einer Versenkung der Abdeckung (22) in der Aussparung (20) erfolgt.

9. Steckverbinder nach einem der vorherigen Ansprüche,
**dadurch gekennzeichnet, dass**
der Getriebemechanismus (26) einen Schieber (28) umfasst, welcher im Wesentlichen parallel zur Bodenstruktur (18) verschiebbar ist.

10. Steckverbinder nach Anspruch 9,
**dadurch gekennzeichnet, dass**
der Schieber (28) mit einem Betätigungsorgan (36; 37) des Fahrzeugsitzes (16) in Eingriff bringbar ist, welches bei einer Verschwenkung des Fahrzeugsitzes (16) eine Verschiebung des Schiebers (28) bewirkt.

11. Steckverbinder nach Anspruch 10,
**dadurch gekennzeichnet, dass**
das Betätigungsorgan (36) eine gekrümmte, insbesondere kreisbogenförmige und bevorzugt im Bereich der Schwenkachse angeordnete, Führungskulisse (40) für einen Führungsbolzen (34) des Schiebers (28) aufweist.

12. Steckverbinder nach Anspruch 11,
**dadurch gekennzeichnet, dass**
die Führungskulisse (40) an ihrem einen Ende (42) offen ist.

13. Steckverbinder nach Anspruch 10,
**dadurch gekennzeichnet, dass**
das Betätigungsorgan (37) eine Schrägfläche (50) aufweist, die mit einer Schrägfläche (48) des Schiebers (28) in Eingriff bringbar ist.
